(19) Europäisches Patentamt
European Patent Office
Office européen des brevets

(11) **EP 2 031 199 A1**

(12) **EUROPEAN PATENT APPLICATION**
published in accordance with Art. 153(4) EPC

(43) Date of publication:
**04.03.2009 Bulletin 2009/10**

(51) Int Cl.:
***F01N 3/08*** *(2006.01)*  ***F01N 3/28*** *(2006.01)*
***F01N 3/36*** *(2006.01)*

(21) Application number: **07744441.2**

(22) Date of filing: **24.05.2007**

(86) International application number:
**PCT/JP2007/061030**

(87) International publication number:
**WO 2007/136141 (29.11.2007 Gazette 2007/48)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **24.05.2006 JP 2006144073**

(71) Applicant: **TOYOTA JIDOSHA KABUSHIKI
KAISHA
Aichi-ken, 471-8571 (JP)**

(72) Inventors:
• **TOSHIOKA, Shunsuke
Toyota-shi, Aichi 471-8571 (JP)**
• **HIROTA, Shinya
Toyota-shi, Aichi 471-8571 (JP)**
• **ASANUMA, Takamitsu
Toyota-shi, Aichi 471-8571 (JP)**

(74) Representative: **Kuhnen & Wacker
Patent- und Rechtsanwaltsbüro
Prinz-Ludwig-Strasse 40A
85354 Freising (DE)**

(54) **EXHAUST EMISSION PURIFIER OF INTERNAL COMBUSTION ENGINE**

(57)    An NOx adsorbent is arranged in an exhaust passage of an internal combustion engine, a fuel addition valve (28) is arranged in the exhaust passage upstream of the NOx adsorbent, and, when the NOx adsorbent should be made to release the NOx, the fuel addition valve (28) adds fuel to the NOx adsorbent in the required fuel addition amount to make the air-fuel ratio of the exhaust gas flowing into the NOx adsorbent temporarily rich. In this case, the required fuel addition amount is added divided into a plurality of operations. The fuel addition rate of the fuel addition valve (28) is detected and the overall addition time from the start of the initial divided addition to the end of the final divided addition is corrected in accordance with the fuel addition rate. Further, the divided addition time, interval, or number of divided additions is corrected so that the amount of fuel actually added from the fuel addition valve (28) is maintained at the required fuel addition amount.

Fig.1

## Description

TECHNICAL FIELD

The present invention relates to an exhaust purification system of an internal combustion engine.

BACKGROUND ART

Known is an internal combustion engine arranging in an engine exhaust passage an NOx adsorbent absorbing NOx in exhaust gas when the air-flow ratio of the inflowing exhaust gas is lean and releasing the adsorbed NOx when the air-fuel ratio of the inflowing exhaust gas becomes rich, arranging a fuel addition valve in the engine exhaust passage upstream of the NOx adsorbent, adding fuel to the NOx adsorbent in the required fuel addition amount so that the air-fuel ratio of the exhaust gas flowing into the NOx adsorbent becomes temporarily rich when the NOx adsorbent should be made to release NOx, and adding the required fuel addition amount divided into a plurality of operations. In this internal combustion engine, the NOx generated when fuel is burned under a lean air-fuel ratio is absorbed by the NOx adsorbent. On the other hand, if the NOx absorption ability of the NOx adsorbent approaches saturation, the air-fuel ratio of the exhaust gas is temporarily made rich and thereby NOx is released from the NOx adsorbent and reduced.

However, if the abnormality occurs of the port of the fuel addition valve becoming clogged by so-called deposits, the fuel addition rate of the fuel addition valve will fall and the amount of fuel actually supplied from the fuel addition valve will be insufficient compared with the required fuel addition amount, so sufficient release and reduction of NOx will become difficult.

Therefore, there is known an internal combustion engine designed so that when an abnormality occurs in the fuel addition valve, the divided addition time is corrected to extend it and the amount of fuel actually added from the fuel addition valve is maintained at the required fuel addition amount (see Japanese Patent Publication (A) No. 2002-242663).

However, if correcting the divided addition time to extend it, the overall addition time from the start of the initial divided addition to the end of the final divided addition becomes longer. At this time, the amount of fuel added from the fuel addition valve is maintained at the required fuel addition amount, so the degree of richness of the air-fuel ratio of the exhaust gas flowing in when fuel is added becomes smaller and the NOx is liable to be unable to be sufficiently released and reduced. That is, when correcting the divided injection time to extend it, it is necessary to correct the overall addition time to shorten it so as to reliably release and reduce the NOx.

The above Japanese Patent Publication (A) No. 2002-242663 describes that when correcting the divided injection time to extend it, the overall addition time not be allowed to become unnecessarily long (see Japanese Patent Publication (A) No. 2002-242663, [0026] etc.), but does not describe to correct the overall addition time to shorten it or how to correct it to shorten it.

DISCLOSURE OF THE INVENTION

Therefore, an object of the present invention is to provide an exhaust purification system of an internal combustion engine able to reliably release and reduce NOx even when the fuel addition rate of a fuel addition valve fluctuates from the regular value.

According to the present invention, there is provided an exhaust purification system of an internal combustion engine provided with an NOx adsorbent arranged in an engine exhaust passage, the NOx adsorbent absorbing NOx in exhaust gas when the inflowing exhaust gas has a lean air-fuel ratio and releasing the absorbed NOx when the inflowing exhaust gas has a rich air-fuel ratio, a fuel addition valve arranged in the engine exhaust passage upstream of the NOx adsorbent, an addition controlling means for adding fuel from the fuel addition valve to the NOx adsorbent in the required fuel addition amount when the NOx adsorbent should be made to release the NOx so that the air-fuel ratio of the exhaust gas flowing into the NOx adsorbent becomes temporarily rich, the addition controlling means performing divided addition adding the required fuel addition amount of fuel divided into a plurality of operations, a detecting means for detecting a fuel addition rate of the fuel addition valve or the amount of fluctuation of the fuel addition rate with respect to a regular value, and a correcting means for correcting the overall addition time from a start of an initial divided addition to an end of a final divided addition to shorten it and correcting control parameters of divided addition in accordance with the detected fuel addition rate or amount of fluctuation of the fuel addition rate so that the amount of fuel actually added from the fuel addition valve is maintained at the required fuel addition amount.

BRIEF DESCRIPTION OF THE DRAWINGS

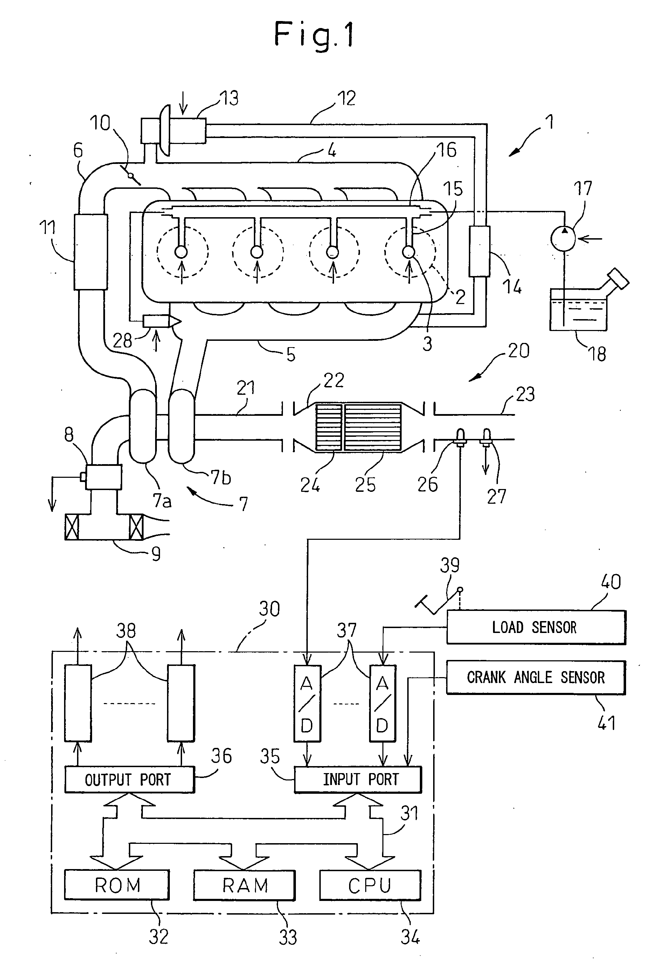

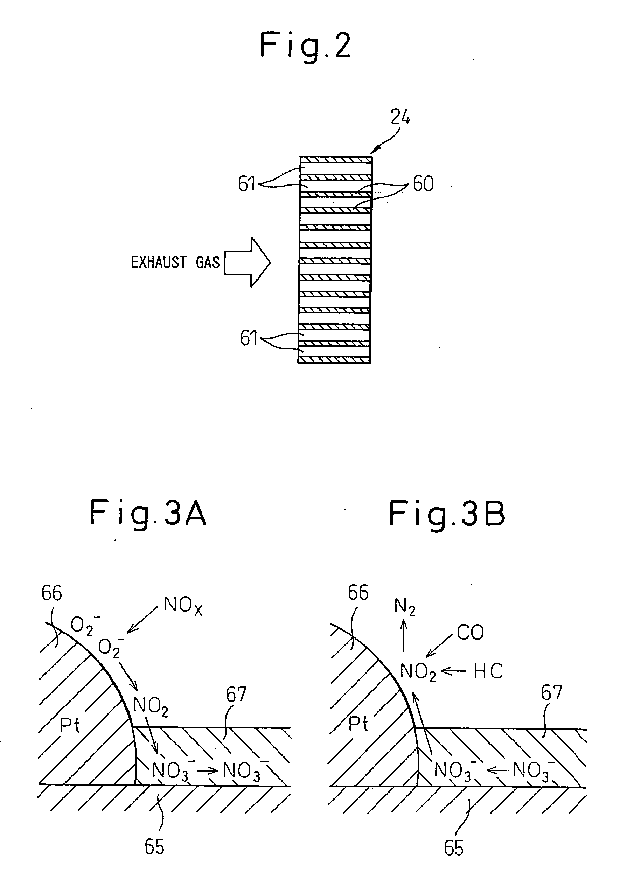

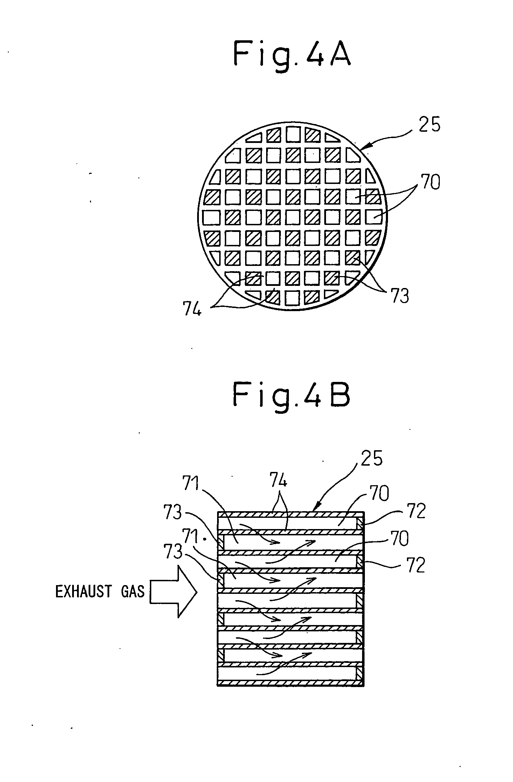

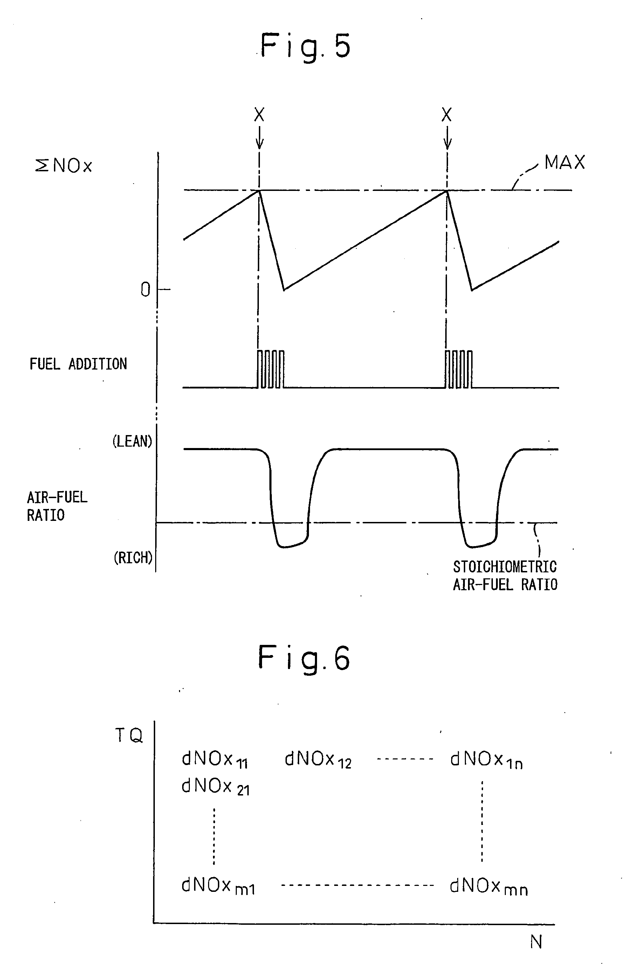

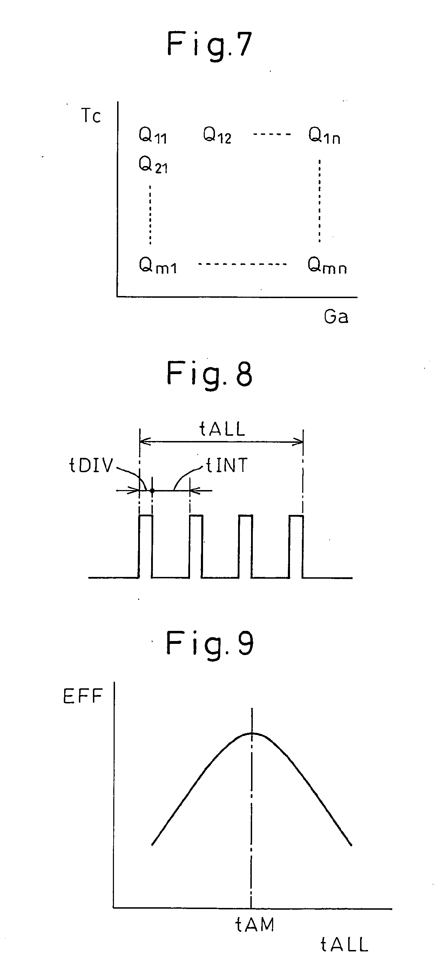

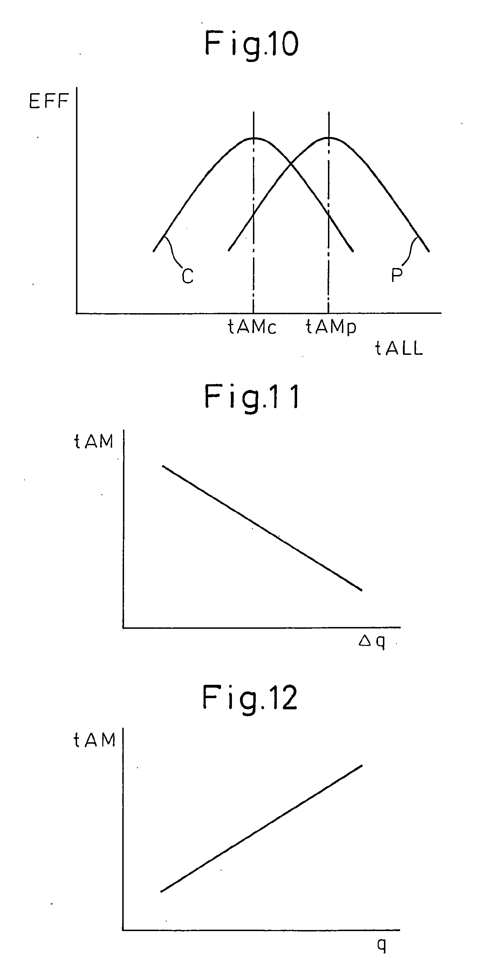

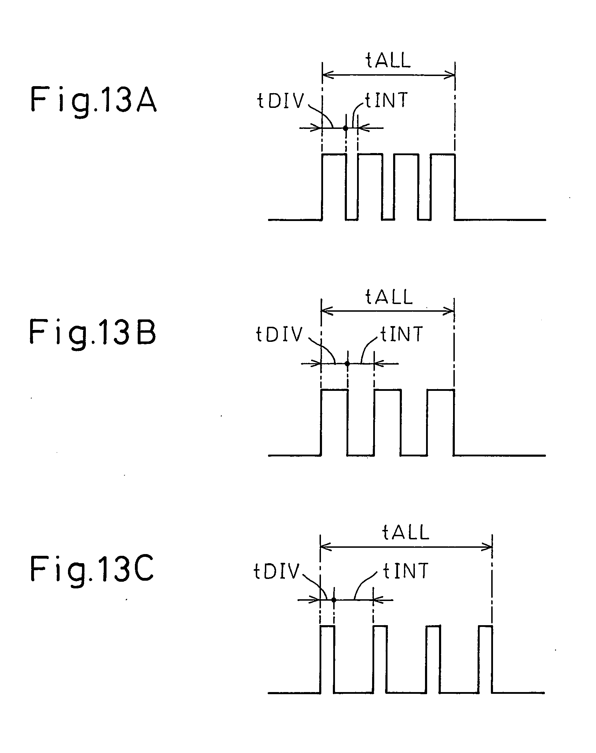

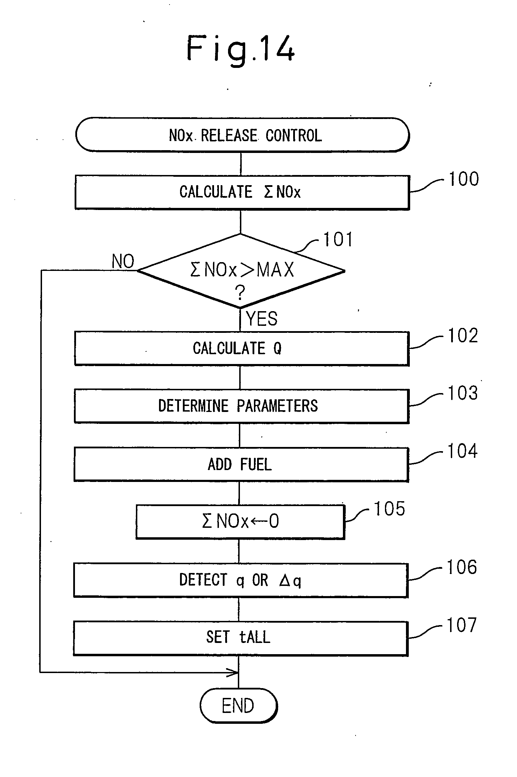

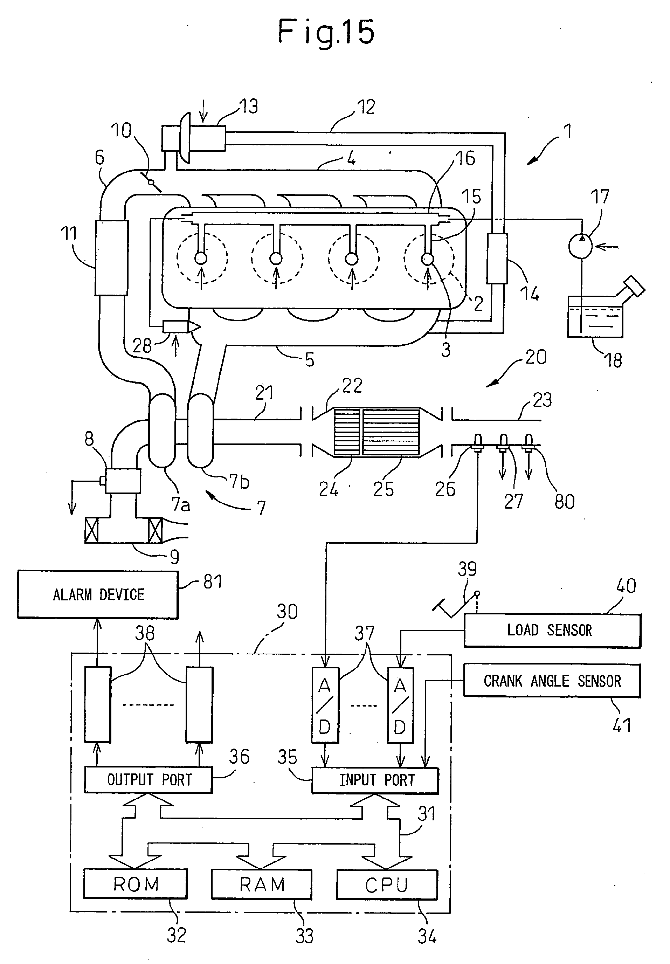

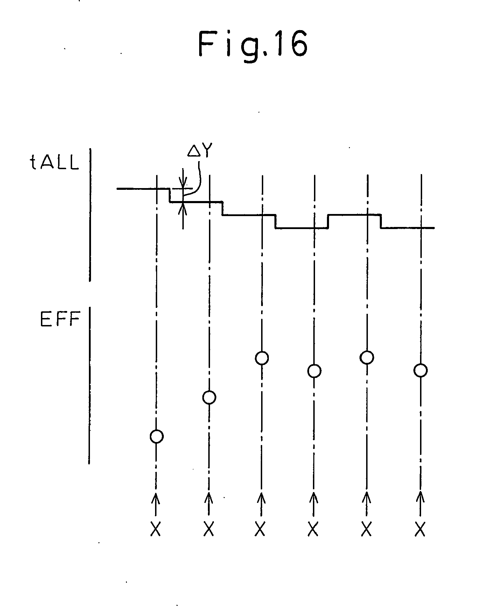

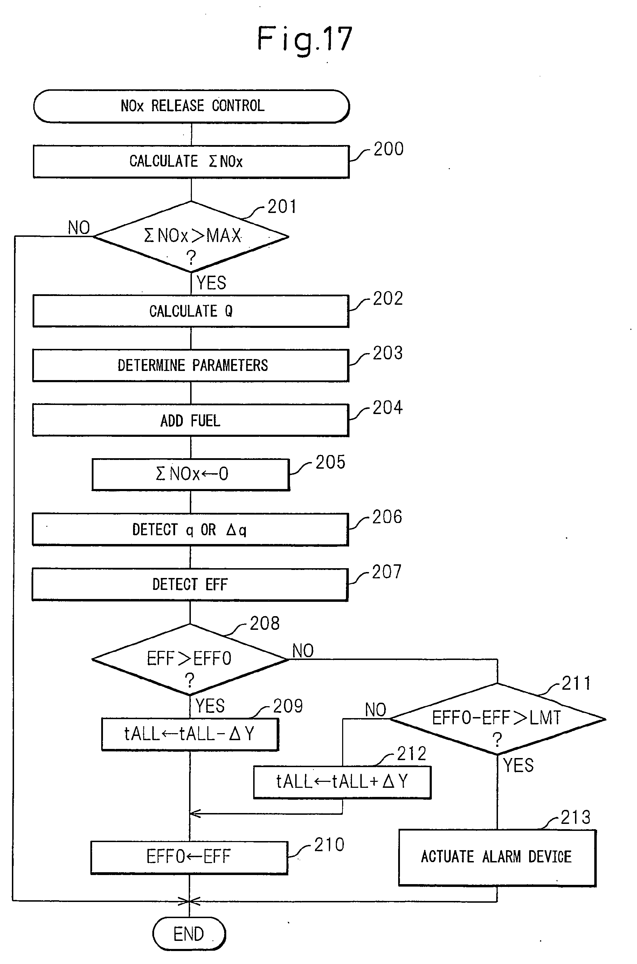

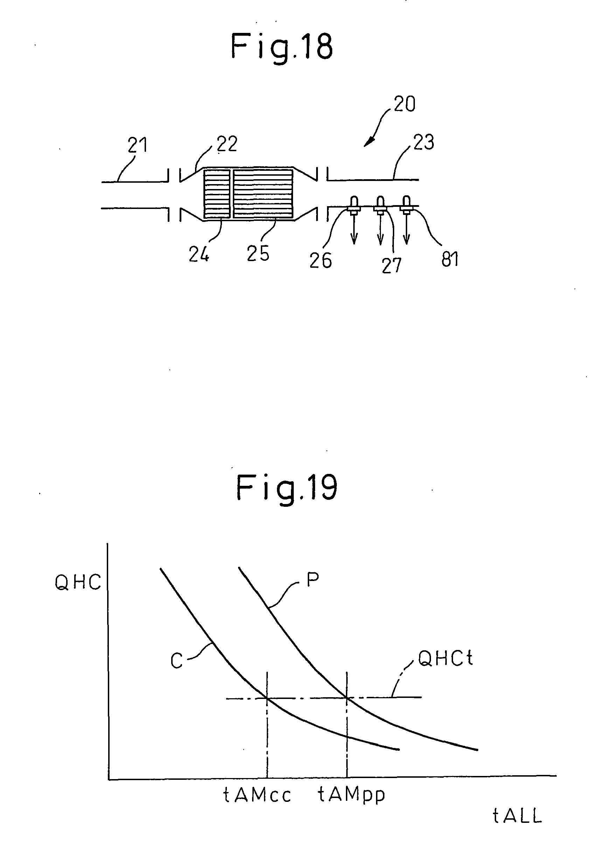

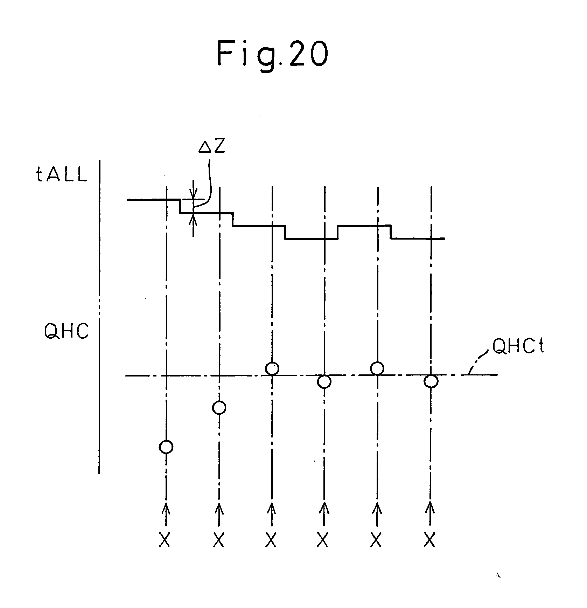

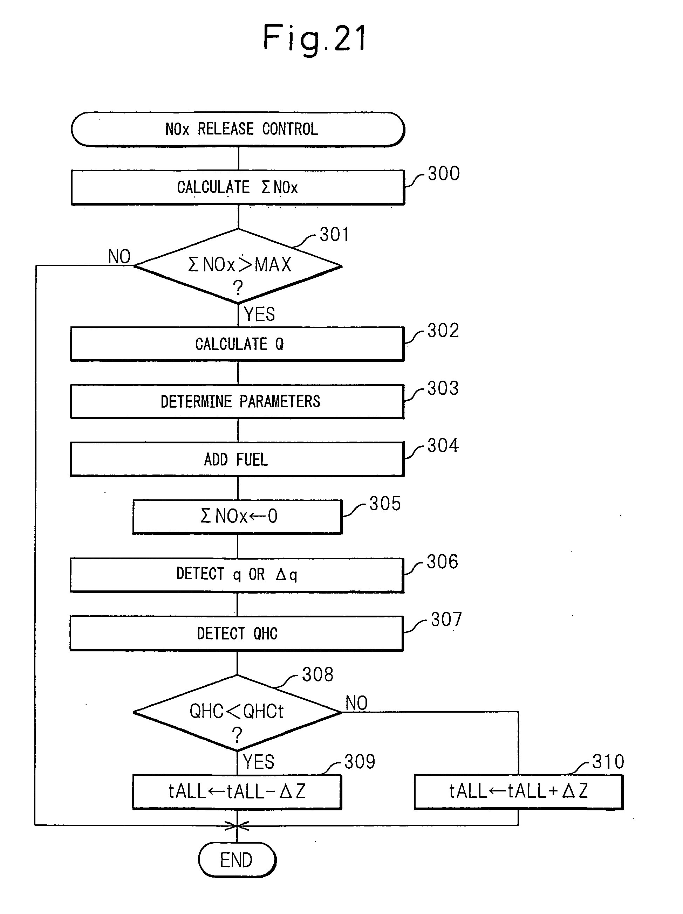

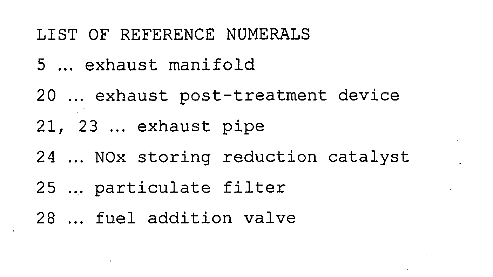

FIG. 1 is an overview of a compression ignition type internal combustion engine, FIG. 2 is a side cross-sectional view of an NOx storing reduction catalyst, FIGS. 3A and 3B are cross-sectional views of a surface part of a catalyst carrier, FIGS. 4A and 4B are views showing the structure of a particulate filter, FIG. 5 is a time chart for explaining the NOx release control, FIG. 6 is a view showing a map of an NOx absorption amount dNOx per unit time, FIG. 7 is a view showing a map of the required fuel addition amount Q, FIG. 8 is a time chart for explaining a fuel addition parameter, FIG. 9 is a view showing the relationship between an overall addition time tALL and NOx purification rate EFF, FIG. 10 is a view showing the relationship of the overall addition time tALL and NOx purification rate EFF, FIG. 11 is a view showing a map of an overall addition time optimum value tAM, FIG. 12 is a view showing a map of an overall addition time optimum value tAM, FIGS. 13A, 13B, and 13C are time charts for explaining fuel addition when correcting the overall addition time tALL to shorten it, FIG. 14 is a flow chart for NOx release control, FIG. 15 is a view showing another embodiment of a compression ignition type internal combustion engine, FIG. 16 is a time chart for explaining another embodiment according to the present invention, FIG. 17 is a flow chart for NOx release control of another embodiment according to the present invention, FIG. 18 is a view showing still another embodiment according to the present invention, FIG. 19 is a view showing the relationship between the overall addition time tALL and exhausted HC amount, FIG. 20 is a time chart for explaining still another embodiment according to the present invention, and FIG. 21 is a flow chart for NOx release control of still another embodiment according to the present invention.

BEST MODE FOR CARRYING OUT THE INVENTION

FIG. 1 shows the case of application of the present invention to a compression ignition type internal combustion engine. However, the present invention can also be applied to a spark ignition type internal combustion engine.

Referring to FIG. 1, 1 shows an engine body, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an air flow meter 8 to an air cleaner 9. Inside the intake duct 6 is arranged a throttle valve 10. Further, around the intake duct 6 is arranged a cooling device 11 for cooling the intake air flowing inside the intake duct 6. In the embodiment shown in FIG. 1, the engine cooling water is guided into the cooling device 11 where the engine cooling water is used to cool the intake air. On the other hand, the exhaust manifold 5 is connected to the inlet of the exhaust turbine 7b of the exhaust turbocharger 7, while the outlet of the exhaust turbine 7b is connected to an exhaust post-treatment device 20.

The exhaust manifold 5 and the intake manifold 4 are connected with each other through an exhaust gas recirculation (hereinafter referred to as an "EGR") passage 12. Inside the EGR passage 12, an electrical control type EGR control valve 13 is arranged. Further, around the EGR passage 12, a cooling device 14 is arranged for cooling the EGR gas flowing through the inside of the EGR passage 12. In the embodiment shown in FIG. 1, engine cooling water is guided into the cooling device 14 where the engine cooling water is used to cool the EGR gas. On the other hand, the fuel injectors 3 are connected through fuel feed pipes 15 to a common rail 16. This common rail 16 is supplied with fuel from an electronic control type variable discharge fuel pump 17. The fuel supplied into the common rail 16 is supplied through the fuel feed pipes 15 to the fuel injectors 3.

The exhaust post-treatment device 20 is provided with an exhaust pipe 21 connected to an outlet of an exhaust turbine 7b, a catalytic converter 22 connected to the exhaust pipe 21, and an exhaust pipe 23 connected to the catalytic converter 22. Inside the catalytic converter 22 are arranged, in order from the upstream side, an NOx storing reduction catalyst 24 and particulate filter 25. Further, the exhaust pipe 23 is provided with a temperature sensor 26 for detecting the temperature of the exhaust gas exhausted from the catalytic converter 22 and an air-fuel ratio sensor 27 for detecting the air-fuel ratio of the exhaust gas exhausted from the catalytic converter 22. The temperature of the exhaust gas exhausted from the catalytic converter 22 expresses the temperature of the NOx storing reduction catalyst 24 and particulate filter 25.

On the other hand, as shown in FIG. 1, the exhaust manifold 5 has a fuel addition valve 28 attached to it. This fuel addition valve 28 is supplied with fuel from the common rail 16. Fuel is added from the fuel addition valve 28 to the inside of the exhaust manifold 5. In this embodiment according to the present invention, this fuel is comprised of diesel oil. Note that the fuel addition valve 28 can also be attached to the exhaust pipe 21.

The electronic control unit 30 is comprised of a digital computer and is provided with a ROM (read only memory) 32, RAM (random access memory) 33, CPU (microprocessor) 34, input port 35, and output port 36 connected with each other by a bi-directional bus 31. The output signals of the air flow meter 8, temperature sensor 26, and air-fuel ratio sensor 27 are input through the corresponding AD converters 37 to the input port 35. Further, the accelerator pedal 39 has connected to it a load sensor 50 generating an output voltage proportional to the amount of depression L of the accelerator pedal 39. The output voltage of the load sensor 40 is input through the corresponding AD converter 37 to the input port 35. Further, the input port 35 has a crank angle sensor 41 connected to it generating an output pulse each time the crankshaft rotates by for example 15°. The CPU 34 calculates the engine speed N based on the output pulse of the crank angle sensor 41. On the other hand, the output port 36 is connected through the corresponding drive circuits 38 to the fuel injectors 3, throttle valve 10 drive device, EGR control valve 13, fuel pump 17, and fuel addition valve 28.

FIG. 2 shows the structure of the NOx storing reduction catalyst 24. In the embodiment shown in FIG. 2, the NOx storing reduction catalyst 24 forms a honeycomb structure and is provided with a plurality of exhaust gas flow passages 61 separated from each other by thin partition walls 60. On the two side surfaces of each partition wall 60, for example, a catalyst carrier comprised of alumina is carried. FIGS. 3A and 3B schematically show cross-sections of the surface parts of this catalyst carrier 65. As shown in FIGS. 3A and 3B, the catalyst carrier 65 has a precious metal catalyst 66 carried dispersed on its surface. Further, the catalyst carrier 65 has a layer of an NOx adsorbent 67 formed on its surface.

In the embodiment according to the present invention, as the precious metal catalyst 66, platinum Pt is used. As the ingredient forming the NOx adsorbent 67, for example, at least one ingredient selected from potassium K, sodium Na, cesium Cs, or another such alkali metal, barium Ba, calcium Ca, or another such alkali earth, and lanthanum La, yttrium Y, or another such rare earth is used.

If the ratio of the air and fuel (hydrocarbons) supplied inside the engine intake passage, combustion chambers 2, and exhaust passage upstream of the NOx storing reduction catalyst 24 is referred to as the "air-fuel ratio of the exhaust gas", the $NO_x$ adsorbent 67 absorbs the $NO_x$ when the air-fuel ratio of the exhaust gas is lean and releases the absorbed $NO_x$ when the oxygen concentration in the exhaust gas falls - in an "$NO_x$ absorption/release action".

That is, explaining the case of using barium Ba as the ingredient forming the $NO_x$ adsorbent 67 as an example, when the air-fuel ratio of the exhaust gas is lean, that is, when the oxygen concentration in the exhaust gas is high, the NO contained in the exhaust gas, as shown in FIG. 3A, is oxidized on the platinum Pt 66 and becomes $NO_2$, next this is absorbed in the $NO_x$ adsorbent 67 and, while bonding with the barium oxide BaO, diffuses in the form of nitric acid ions $NO_3^-$ inside the $NO_x$ adsorbent 67. In this way, the $NO_x$ is absorbed inside the $NO_x$ adsorbent 67. So long as the oxygen concentration in the exhaust gas is high, $NO_2$ is produced on the surface of the platinum Pt 66. So long as the $NO_x$ adsorption ability of the $NO_x$ adsorbent 67 is not saturated, the $NO_2$ is absorbed in the $NO_x$ adsorbent 67 and nitric acid ions $NO_3^-$ are produced.

As opposed to this, if the air-fuel ratio of the exhaust gas is made rich or the stoichiometric air-fuel ratio, the oxygen concentration in the exhaust gas falls, so the reaction proceeds in the opposite direction ($NO_3^- \rightarrow NO_2$) and therefore, as shown in FIG. 3B, the nitric acid ions $NO_3^-$ in the $NO_x$ adsorbent 67 are released in the form of $NO_2$ from the $NO_x$ adsorbent 67. Next, the released $NO_x$ is reduced by the unburned HC and CO contained in the exhaust gas.

In this way, when the air-fuel ratio of the exhaust gas is lean, that is, when combustion is performed under a lean air-fuel ratio, the $NO_x$ in the exhaust gas is absorbed in the $NO_x$ adsorbent 67. However, when combustion continues under a lean air-fuel ratio, during that time the $NO_x$ adsorption ability of the $NO_x$ adsorbent 67 ends up becoming saturated and therefore the $NO_x$ adsorbent 67 ends up no longer being able to absorb the $NO_x$. Therefore, in the embodiment according to the present invention, before the adsorption ability of the $NO_x$ adsorbent 67 becomes saturated, fuel is supplied from the fuel addition valve 28 so as to temporarily make the air-fuel ratio of the exhaust gas rich and thereby make the $NO_x$ be released from the $NO_x$ adsorbent 67.

FIGS. 4A and 4B show the structure of the particulate filter 25. Note that FIG. 4A shows a front view of the particulate filter 25, while FIG. 4B shows a side cross-sectional view of the particulate filter 25. As shown in FIGS. 4A and 4B, the particulate filter 25 forms a honeycomb structure and is provided with a plurality of exhaust flow passages 70, 71 extending in parallel with each other. These exhaust flow passages are comprised of exhaust gas inflow passages 70 with downstream ends closed by plugs 72 and exhaust gas outflow passages 71 with upstream ends closed by plugs 73. Note that the hatched parts in FIG. 4A show the plugs 73. Therefore, the exhaust gas inflow passages 70 and exhaust gas outflow passages 71 are alternately arranged via thin partition walls 74. In other words, the exhaust gas inflow passages 70 and exhaust gas outflow passages 71 are arranged so that each exhaust gas inflow passage 70 is surrounded by four exhaust gas outflow passages 71 and each exhaust gas outflow passage 71 is surrounded by four exhaust gas inflow passages 70.

The particulate filter 25 is for example formed from a porous material such as cordierite. Therefore, the exhaust gas flowing into the exhaust gas inflow passage 70, as shown by the arrows in FIG. 4B, passes through the surrounding partition walls 74 and flows out into the adjoining exhaust gas outflow passages 71.

In the embodiment according to the present invention, the peripheral walls of the exhaust gas inflow passages 70 and exhaust gas outflow passages 71, that is, the two side surfaces of the partition walls 74 and the inside walls of the fine holes in the partition walls 74, carry, for example, a catalyst carrier comprised of alumina. On the surface of the catalyst carrier 65, as shown in FIGS. 3A and 3B, a precious metal catalyst 66 comprised of platinum Pt is carried diffused in it and a layer of an $NO_x$ adsorbent 67 is formed.

Therefore, when the fuel is burned under a lean air-fuel ratio, the NOx in the exhaust gas is also absorbed in the NOx adsorbent 67 on the particulate filter 25. The NOx absorbed in this NOx adsorbent 67 is released by the fuel addition valve 28 adding fuel.

On the other hand, the particulate matter contained in the exhaust gas is trapped on the particulate filter 25 and is successively oxidized. However, if the trapped amount of particulate matter becomes greater than the amount of oxidized particulate matter, the particulate matter is gradually deposited on the particulate filter 25. In this case, if the deposited amount of the particulate matter increases, a drop in the engine output ends up being invited. Therefore, when the deposited amount of the particulate matter increases, the deposited particulate matter must be removed. In this case, if raising the temperature of the particulate filter 25 under an excess of air to about 600°C, the deposited particulate matter will be oxidized and removed.

Therefore, in the embodiment according to the present invention, when the amount of particulate matter deposited on the particulate filter 25 exceeds the allowable amount, while maintaining the air-fuel ratio of the exhaust gas flowing into the particulate filter 25 lean, the fuel addition valve 28 adds fuel, the heat of oxidation reaction of the added fuel is used to raise the temperature of the particulate filter 25, and thereby the deposited particulate matter is removed by oxidation.

Note that in FIG. 1, the NOx storing reduction catalyst 24 can be omitted. Further, as the particulate filter 25 in FIG. 1, a particulate filter not carrying an NOx adsorbent 67 can be used.

Now, in the embodiment according to the present invention, as shown by X in FIG. 5, each time the NOx amount cumulative value ΣNOx exceeds the allowable value MAX, fuel is added from the fuel addition valve 28 and the air-fuel ratio of the exhaust gas flowing into the NOx adsorbent 67 carried on the NOx storing reduction catalyst 24 and on the particulate filter 25 is temporarily switched to rich. As a result, NOx is released from the NOx adsorbent 67 and reduced.

In this case, in the embodiment according to the present invention, the NOx amount dNOx absorbed in the NOx adsorbent 67 per unit time is stored as a function of the required torque TQ and engine speed N in the form of a map as shown in FIG. 6 in advance in the ROM 32. By cumulatively adding this NOx amount dNOx, the cumulative value ΣNOx of the NOx amount absorbed in the NOx adsorbent 67 is calculated.

On the other hand, for switching the air-fuel ratio of the exhaust gas flowing into the NOx adsorbent 67 to rich, the fuel is added from the fuel addition valve 28 by the required fuel addition amount Q. This required fuel addition amount Q is for example stored as a function of the intake air amount Ga and temperature Tc of the NOx adsorbent 67 in the form of a map as shown in FIG. 7 in advance in the ROM 32.

As will be understood from FIG. 5, in the embodiment according to the present invention, the required fuel addition amount Q is added divided into a plurality of operations. In the example shown in FIG. 8, the divided addition of the time tDIV is performed four times separated by the intervals tINT. Here, if the number of divided additions is expressed by n (=2,3,...), the overall addition time tALL from the start of the initial divided addition to the end of the final divided addition is expressed by the following formula:

$$tALL=n \cdot tDIV+(n-1) \cdot tINT$$

In this case, the fact that if the overall addition time tALL changes, even if maintaining the fuel addition amount constant, the NOx purification rate EFF of the NOx adsorbent 67 changes was confirmed by the present inventors. This will be explained while referring to FIG. 9. Here, if the amount of NOx flowing into the NOx adsorbent 67 in the time from the end of the previous addition of fuel for release and reduction of NOx to the end of the next addition of fuel for release and reduction of NOx is expressed as "Nin" and the amount of NOx flowing out from the NOx adsorbent 67 as "Nout", the NOx purification rate EFF can for example be expressed by (Nin-Nout)/Nin.

FIG. 9 shows the NOx purification rate EFF of the NOx adsorbent 67 when holding the fuel addition amount constant and changing the overall addition time tALL. Note that for example by maintaining the divided addition time tDIV and number of divisions n and changing the interval tINT, it is possible to maintain the fuel addition amount constant and change the overall addition time tALL.

As shown in FIG. 9, there is an optimum value tAM maximizing the NOx purification rate EFF in the overall addition time tALL. The NOx purification rate EFF falls as the overall addition time tALL becomes shorter than or longer than the optimum value tAM. This is considered to be because if the overall addition time tALL becomes shorter, the time during which the air-fuel ratio of the exhaust gas flowing into the NOx adsorbent 67 is held rich becomes shorter and if the overall addition time tALL becomes longer, the degree of richness of the air-fuel ratio of the exhaust gas flowing into the NOx adsorbent 67 becomes smaller.

However, as explained at the start, if the port of the fuel addition valve 28 is clogged by deposits mainly comprised of solid carbon, the fuel addition amount per unit time of the fuel addition valve 28, that is, the fuel addition rate q, falls from the value when the fuel addition valve 28 is not clogged, that is, the regular value qp. In this case, if correcting the divided addition time tDIV to extend it, the amount of fuel actually added from the fuel addition valve 28 can be maintained at the required fuel addition amount Q. On top of this, if correcting the interval tINT to shorten it to correct the overall addition time tALL to shorten it to the optimum value tAMp of when the fuel addition rate q is the regular value qp, it appears that the NOx purification rate EFF can be maintained at the maximum.

However, the fact that when the fuel addition rate q falls from the regular value qp, even if correcting the overall addition time tALL to shorten it to the above-mentioned tAMp, the NOx purification rate EFF cannot be maintained at the maximum and the overall addition time tALL has to be further corrected to shorten it was discovered by the present inventors. This will be explained with reference to FIG. 10.

In FIG. 10, the curve P shows the NOx purification rate EFF when the fuel addition rate q is the regular value qp, while the curve C shows the NOx purification rate EFF when the fuel addition rate q falls from the regular value qp. Note that in each case, the amount of fuel actually added from the fuel addition valve 28 is maintained at the required fuel addition amount Q.

As will be understood from FIG. 10, when the fuel addition rate q falls from the regular value qp, the NOx purification rate EFF shown by the curve C shifts in the direction where the overall addition time tALL becomes shorter and the optimum value tAMc of the overall addition time tALL for maximizing the NOx purification rate EFF becomes shorter than the optimum value tAMp when the fuel addition rate q is the regular value qp. This is believed to be because of the following reasons. That is, if the fuel addition rate q falls, the penetrating force of the added fuel falls, so the added fuel depositing on the inside walls of the exhaust passage increases. The added fuel deposited once on the inside wall surfaces of the exhaust passage later evaporates, separates from the inside wall surfaces of the exhaust passage, and then reaches the NOx adsorbent 67. For this reason, the added fuel gradually separates from the wall inside the exhaust passage and reaches the NOx adsorbent 67. As a result, the degree of richness of the air-fuel ratio of the exhaust gas flowing into the NOx adsorbent 67 becomes smaller.

This being so, to make the degree of richness sufficiently large, it is necessary to add the fuel in the required fuel addition amount Q in a short time, that is, it is necessary to further correct the overall addition time tALL to shorten it.

In this case, the optimum value tAM of the overall addition time tALL when the fuel addition rate q falls from the regular value qp, as shown in FIG. 11, becomes shorter the larger the drop $\Delta q$ (=qp-q) of the fuel addition rate q from the regular value qp or, as shown in FIG. 12, becomes shorter the smaller the fuel addition rate q itself.

Therefore, in the embodiment according to the present invention, the fuel addition rate q or its drop $\Delta q$ is detected, the optimum value tAM of the overall addition time is calculated in accordance with this fuel addition rate q or its drop $\Delta q$, and the overall addition time tALL is set to this optimum value tAM. On top of this, the divided addition time tDIV, interval tINT, or number of divisions n is corrected in accordance with the detected fuel addition rate q or its drop $\Delta q$ so that the amount of fuel actually added in this overall addition time tALL matches with the required fuel addition amount Q.

For example, when the fuel addition rate q is the regular value qp, the addition time required for adding the required fuel addition amount Q is substantially (Q/qp), so the divided addition time tDIVp when the fuel addition rate q is the regular value qp can be found from the following formula:

$$tDIVp=(Q/qp)/n$$

This being so, the divided addition time tDIV required for adding the required fuel addition amount Q at the time of the fuel addition rate q can be found from the following formula:

$$tDIV=tDIVp\cdot(qp/q)$$

Therefore, the interval tINT required for performing the divided addition of the divided addition time tDIV n number of times in the overall addition time tAL can be found from the following formula L:

$$tINT=(tALL-n\cdot tDIV)/(n-1)$$

Various methods are known for detecting the fuel addition rate q or its drop $\Delta q$. For example, it is possible to detect the fuel addition rate q or its drop $\Delta q$ in accordance with the extent of rise of the NOx adsorbent temperature Tc occurring when actually adding fuel from the fuel addition valve 28. That is, it is learned that at the time of fuel addition, when the rise in the NOx adsorbent temperature Tc detected by the temperature sensor 26 (FIG. 1) is large, the fuel addition rate q is large, while when the rise in temperature is small, the fuel addition rate q is small.

In the embodiment according to the present invention, when the fuel addition valve 28 adds fuel so as to release NOx from the NOx adsorbent 67 and reduce it, the fuel addition rate q or its addition amount $\Delta q$ is detected based on the NOx adsorbent temperature Tc. Based on this fuel addition rate q or its addition amount $\Delta q$, the optimum value tAM of the overall addition time tALL is calculated from the map of FIG. 11 or FIG. 12. At the fuel addition for release and reduction of NOx performed next, the overall addition time tALL is set to this optimum value tAM, the required fuel addition amount Q is calculated, and the divided addition time tDIV and interval tINT for making the amount of fuel actually added during the overall addition time tALL match with the required fuel addition amount Q are calculated using the fuel addition rate q or its drop $\Delta q$.

FIG. 13A and 13B show an example of addition of fuel when the fuel addition rate q falls below the regular value qp. In the example shown in FIG. 13A, compared with the case where the fuel addition rate q shown in FIG. 13C is the regular value qp, the overall addition time tALL is corrected to shorten it, the divided addition time tDIV is corrected to extend it, the interval tINT is corrected to shorten it, and the number of divided additions n is maintained. On the other hand, in the example shown in FIG. 13B, compared with the case shown in FIG. 13C, the overall addition time tALL is corrected to shorten it, the divided addition time tDIV is corrected to extend it, the number of divided additions n is reduced, and the interval tINT is also corrected to shorten it.

FIG. 14 shows the NOx release control routine.

Referring to FIG. 14, first, at step 100, the NOx

amount $\Sigma NOx$ absorbed in the NOx adsorbent 67 is calculated. In the embodiment according to the present invention, the NOx amount dNOx absorbed per unit time is calculated from the map shown in FIG. 6, and this dNOx is added to the NOx amount $\Sigma NOx$ absorbed in the NOx adsorbent 67. Next, at step 101, it is determined if the absorbed NOx amount $\Sigma NOX$ has exceeded the allowable value MAX. When $\Sigma NOX > MAX$, the routine proceeds to step 102 where the required fuel addition amount Q is calculated from the map of FIG. 7. At the next step 103, the fuel addition parameter is calculated. That is, the divided addition time tDIV, interval tINT, and number of divided additions n required for addition of the required fuel addition amount Q calculated at step 102 in the overall addition time tALL preset at step 107 of the previous processing cycle are calculated using the fuel addition rate q or its drop $\Delta q$ detected at step 106 of the previous processing cycle. At the next step 104, fuel is added based on the fuel addition parameter determined at step 103. At the next step 105, the absorbed NOx amount $\Sigma NOx$ is returned to zero. At the next step 106, the fuel addition rate q or its drop $\Delta q$ is detected. At the next step 107, the overall addition time optimum value tAM is calculated from the map of FIG. 11 or FIG. 12 based on the fuel addition rate q or its drop $\Delta q$ detected at step 106. This optimum value tAM is set as the overall addition time tALL for the next fuel addition.

Note that it is also possible that when the detected fuel addition rate q is larger than a threshold value or its drop $\Delta q$ is smaller than a threshold value, the overall addition time tALL, divided addition time tDIV, interval tINT, or number of divided additions n are not corrected and when the fuel addition rate q becomes smaller than a threshold value or its drop $\Delta q$ becomes larger than a threshold value, the overall addition time tALL etc. are corrected.

FIG. 15 shows another embodiment according to the present invention. The embodiment shown in FIG. 15 differs in configuration from the embodiment of FIG. 1 in the point that an NOx sensor 80 is attached to the exhaust pipe 23 for detecting the NOx amount or NOx concentration flowing out from the NOx adsorbent 67 and the point that an alarm device 81 is provided for indicating a breakdown of the fuel addition valve 28. The output signal of the NOx sensor 80 is input through the corresponding AD converter 37 to the input port 35, the alarm device 81 is connected through the corresponding drive device 38 to the output port 36, and control is performed based on the output signal from the electronic control unit 30.

As explained above, when the fuel addition rate q of the fuel addition valve 28 falls, if the overall addition time tALL is held constant, the NOx purification rate of the NOx adsorbent 67 falls. Therefore, in another embodiment according to the present invention, the NOx purification rate EFF of the NOx adsorbent 67 is detected based on the output of the NOx sensor 80. The overall addition time tALL is corrected so that this NOx purification rate EFF is maintained at the maximum.

That is, deposits clog the fuel addition valve 28 along with the elapse of time, therefore fuel addition rate q becomes smaller along with the elapse of time and the fuel addition rate drop $\Delta q$ becomes greater along with the elapse of time. On the other hand, as explained referring to FIG. 9 or FIG. 10, when the fuel addition rate q falls, if correcting the overall addition time tALL to shorten it, the NOx purification rate EFF can be increased. Therefore, in another embodiment according to the present invention, each time fuel is added to release and reduce NOx, the overall addition time tALL is shortened.

However, as will be understood from FIG. 9, if the overall addition time tALL becomes shorter than the optimum value tAM, the shorter the overall addition time tALL becomes, the more the NOx purification rate EFF drops. Therefore, in another embodiment according to the present invention, when as a result of the correction of the overall addition time tALL to shorten it, the overall addition time tALL is corrected to shorten it so long as the NOx purification rate EFF rises. When as a result of the correction of the overall addition time tALL to shorten it, the NOx purification rate EFF falls, the overall addition time tALL is corrected to extend it. In this way, the overall addition time tALL can be maintained at the optimum value tAM and the NOx purification rate EFF can be maintained at the maximum.

In FIG. 16, X indicates the timing when fuel is added for release and reduction of NOx. As shown in FIG. 16, the overall addition time tALL is for example corrected to shorten it by a small predetermined value $\Delta Y$. As a result, when the NOx purification rate EFF rises, the overall addition time tALL is further corrected to shorten it by $\Delta Y$. As opposed to this, when as a result of the overall addition time tALL being corrected to shorten it, the NOx purification rate EFF falls, the overall addition time tALL is extended by $\Delta Y$, that is, is returned to the original value. In this way, the NOx purification rate EFF is maintained at the maximum.

For example, when the clogging of the fuel addition valve 28 becomes serious and the fuel addition rate q becomes considerably small, even if correcting the overall addition time tALL to shorten it, the NOx purification rate EFF can no longer be maintained at the maximum and is liable to fall below the previous NOx purification rate EFF0. Therefore, when the drop (=EFF0-EFF) of the NOx purification rate EFF as a result of correction of the overall addition time tALL to shorten it from the previous NOx purification rate EFF0 is larger than the allowable value, it is determined that the fuel addition valve 28 has broken and the alarm device 81 is actuated. Note that when the NOx purification rate EFF is lower than the allowable limit as a result of correction of the overall addition time tALL to shorten it, it can be determined that the fuel addition valve 28 is broken.

FIG. 17 shows the NOx release control routine of another embodiment according to the present invention.

Referring to FIG. 17, first, at step 200, the NOx amount ΣNOx absorbed in the NOx adsorbent 67 is calculated. Next, at step 201, it is determined whether the absorbed NOx amount ΣNOX has exceeded the allowable value MAX. When ΣNOX>MAX, the routine proceeds to step 202 where the required fuel addition amount Q is calculated from the map of FIG. 7. At the next step 203, the fuel addition parameter is calculated. That is, the divided addition time tDIV, interval tINT, and number of divided additions n required for addition of the required fuel addition amount calculated at step 202 in the overall addition time tALL preset at step 209 or step 212 of the previous processing cycle are calculated using the fuel addition rate q or its drop Δq detected at step 206 of the previous processing cycle. At the next step 204, the fuel is added based on the fuel addition parameter determined at step 203. At the next step 205, the absorbed NOx amount ΣNOx is returned to zero. At the next step 206, the fuel addition rate q or its drop Δq is detected. At the next step 207, the NOx purification rate EFF of the NOx adsorbent 67 is detected. At the next step 208, it is determined if the current NOx purification rate EFF detected at step 207 is higher than the previous NOx purification rate EFF0. When EFF>EFF0, next, the routine proceeds to step 209, where the overall addition time tALL is shortened by the predetermined value ΔY. Next, the routine proceeds to step 210, where the current NOx purification rate EFF is made EFF0. As opposed to this, when EFF≤EFF0, the routine proceeds from step 208 to step 211, where it is determined if the drop (=EFF0-EFF) of the current NOx purification rate EFF from the previous NOx purification rate EFF0 is larger than an allowable value LMT. When EFF0-EFF≤LMT, next, the routine proceeds to step 212, where the overall addition time tALL is extended by a predetermined value ΔY. Next, the routine proceeds to step 210. As opposed to this, when EFF0-EFF>LMT, next, the routine proceeds to step 213, where the alarm device 82 is actuated.

FIG. 18 shows still another embodiment according to the present invention. The embodiment shown in FIG. 18 differs in configuration from the embodiment of FIG. 15 in the point of an HC sensor 82 for detecting the amount of HC or HC concentration in the exhaust gas flowing out from the NOx adsorbent 67 being attached to the exhaust pipe 23. The output signal of the HC sensor 82 is input through the corresponding AD converter 37 to the input port 35.

FIG. 19 shows the HC amount QHC exhausted from the NOx adsorbent 67 when fuel is added when holding the fuel addition amount constant and changing the overall addition time tALL. In FIG. 19, the curve P shows the HC amount QHC exhausted when the fuel addition rate q is the regular value qp, while curve C shows the HC amount QHC exhausted when the fuel addition rate q falls from the regular value qp.

Looking at for example the curve P of FIG. 19, as the overall addition time tALL becomes shorter, the HC amount QHC exhausted becomes greater, while as the overall addition time tALL becomes longer, the HC amount QHC exhausted becomes smaller. On the other hand, if the fuel addition rate q falls from the regular value qp, the NOx purification rate EFF shown by the curve C shifts in a direction where the overall addition time tALL becomes shorter. This is because, as explained above, if the fuel addition rate q falls, the degree of richness of the air-fuel ratio of the exhaust gas flowing into the NOx adsorbent 67 becomes smaller.

This being so, it is learned that when the HC amount QHC exhausted when adding fuel is small, the degree of richness of the inflowing exhaust gas becomes smaller and the fuel addition rate q falls.

Therefore, in still another embodiment according to the present invention, the HC amount QHC exhausted when fuel is added is detected by the HC sensor 82 and the overall addition time tALL is corrected so that this exhausted HC amount QHC matches with the target value QHCt. That is, in the example shown in FIG. 19, the overall addition time tALL is corrected by being shortened from tAMpp to tAMcc. As a result, a large amount of HC being exhausted from the NOx adsorbent 67 can be prevented, the degree or richness of the air-fuel ratio of the inflowing exhaust gas can be maintained high, and the NOx can be released and reduced well.

In FIG. 20, X shows the timing for addition of fuel for release and reduction of NOx. As shown in FIG. 20, when the exhausted HC amount QHC is smaller than the target value QHCt, the overall addition time tALL is corrected to be shortened by for example a small predetermined value ΔZ. As opposed to this, if the overall addition time tALL becomes larger than the target value QHCt, the overall addition time tALL is extended by ΔZ, that is, is returned to the original value. In this way, the exhausted HC amount QHC is maintained at the target value QHCt.

In this case, if setting the exhausted HC amount for maximizing the NOx purification rate EFF at the target value QHCt, it is possible to maintain the NOx purification rate EFF at the maximum.

FIG. 21 shows the NOx release control routine of still another embodiment according to the present invention.

If referring to FIG. 21, first, at step 300, the NOx amount ΣNOx absorbed in the NOx adsorbent 67 is calculated. Next, at step 301, it is determined if the absorbed NOx amount ΣNOX has exceeded an allowable value MAX. When ΣNOX>MAX, the routine proceeds to step 302 where the required fuel addition amount Q is calculated from the map of FIG. 7. At the next step 303, the fuel addition parameter is calculated. That is, the divided addition time tDIV, interval tINT, and number of divided additions n required for addition of the required fuel addition amount calculated at step 302 in the overall addition time tALL preset at step 309 or step 310 of the previous processing cycle are calculated using the fuel addition rate q or its drop Δq detected at step 306 of the previous processing cycle. At the next step 304, fuel is added based on the fuel addition parameter determined at step 303. At the next step 305, the absorbed NOx amount ΣNOx is returned to zero. At the next step 306, the fuel addition rate q or its drop Δq is detected. At the next step 307, the HC amount QHC exhausted from the NOx adsorbent 67 is detected. At the next step 308, it is determined whether the exhausted HC amount QHC detected at step 307 is smaller than the target value QHCt. When QHC<QHCt, next, the routine proceeds to step 309, where the overall addition time tALL is shortened by the predetermined value ΔZ. As opposed to this, when QHC≥QHCt, the routine proceeds from step 308 to step 310, where the overall addition time tALL is extended by a predetermined value ΔZ.

Note that when the HC amount QHC exhausted when correcting the overall addition time tALL to shorten it falls compared with the HC amount QHC0 exhausted at the time of the previous fuel addition and the drop at this time (=QHC0-QHC) becomes larger than an allowable value, it may be determined that the fuel addition valve 28 has broken down and an alarm device 81 may be actuated. Alternatively, when the HC amount QHC exhausted when correcting the overall addition time tALL to shorten it is smaller than the allowable limit, it may be determined that the fuel addition valve 28 has broken down.

## Claims

1. An exhaust purification system of an internal combustion engine provided with:

    an NOx adsorbent arranged in an engine exhaust passage, said NOx adsorbent absorbing NOx in exhaust gas when the inflowing exhaust gas has a lean air-fuel ratio and releasing the absorbed NOx when the inflowing exhaust gas has a rich air-fuel ratio,
    a fuel addition valve arranged in the engine exhaust passage upstream of said NOx adsorbent,
    an addition controlling means for adding fuel from the fuel addition valve to the NOx adsorbent in the required fuel addition amount when the NOx adsorbent should be made to release the NOx so that the air-fuel ratio of the exhaust gas flowing into the NOx adsorbent becomes temporarily rich, said addition controlling means performing divided addition adding said required fuel addition amount of fuel divided into a plurality of operations,
    a detecting means for detecting a fuel addition rate of the fuel addition valve or the amount of fluctuation of the fuel addition rate with respect to a regular value, and
    a correcting means for correcting the overall addition time from a start of an initial divided addition to an end of a final divided addition to shorten it and correcting control parameters of divided addition in accordance with said detected fuel addition rate or amount of fluctuation of the fuel addition rate so that the amount of fuel actually added from the fuel addition valve is maintained at the required fuel addition amount.

2. An exhaust purification system of an internal combustion engine as set forth in claim 1, wherein said control parameters of divided addition are a divided addition time and an interval from a previous divided addition to a next divided addition or number of divided additions.

3. An exhaust purification system of an internal combustion engine as set forth in claim 1, wherein said correcting means corrects the overall addition time so as to become shorter the smaller said fuel addition rate or the larger the drop of said fuel addition rate.

4. An exhaust purification system of an internal combustion engine as set forth in claim 1, wherein the system is further provided with an NOx purification rate detecting means for detecting an NOx purification rate of the NOx adsorbent and said correcting means corrects the overall addition time to shorten it or corrects it to extend it so that said detected NOx purification rate matches a target value.

5. An exhaust purification system of an internal combustion engine as set forth in claim 1, wherein the system is further provided with an HC amount detecting means for detecting an amount of HC in the exhaust gas flowing out from the NOx adsorbent when fuel is added and said correcting means corrects the overall addition time to shorten it or corrects it to extend it so that said detected HC amount matches a target amount.

6. An exhaust purification system of an internal combustion engine as set forth in claim 1, wherein the system is further provided with an NOx purification rate detecting means for detecting an NOx purification rate of the NOx adsorbent and a determining means for determining that the fuel addition valve is broken when the drop in the detected NOx purification rate is larger than an allowable value or said detected NOx purification rate is lower than an allowable limit even if correcting the overall addition time to shorten it and correct the control parameters of the divided addition.

# Fig.1

LOAD SENSOR

CRANK ANGLE SENSOR

A/D

A/D

OUTPUT PORT

INPUT PORT

ROM

RAM

CPU

# Fig.2

EXHAUST GAS

# Fig.3A

# Fig.3B

# Fig.4A

# Fig.4B

# Fig. 5

$\Sigma$NOx

MAX

FUEL ADDITION

(LEAN)

AIR-FUEL
RATIO

(RICH)

STOICHIOMETRIC
AIR-FUEL RATIO

# Fig. 6

TQ

dNOx$_{11}$    dNOx$_{12}$  -------  dNOx$_{1n}$

dNOx$_{21}$

dNOx$_{m1}$  -------------------  dNOx$_{mn}$

N

# Fig.7

$T_c$

$Q_{11}$    $Q_{12}$    $----$    $Q_{1n}$

$Q_{21}$

$Q_{m1}$    $----------$    $Q_{mn}$

$G_a$

# Fig. 8

$t_{ALL}$

$t_{DIV}$    $t_{INT}$

# Fig. 9

$EFF$

$t_{AM}$

$t_{ALL}$

# Fig.10

# Fig.11

# Fig.12

Fig.13A

Fig.13B

Fig.13C

# Fig.14

```
        ┌─────────────────────────────┐
        │      NOx RELEASE CONTROL     │
        └─────────────────────────────┘
                       │
        ┌─────────────────────────────┐
        │       CALCULATE  Σ NOx       │───100
        └─────────────────────────────┘
                       │
                      ╱ ╲         101
              NO    ╱     ╲
        ┌─────────╱ Σ NOx>MAX╲
        │         ╲    ?    ╱
        │          ╲      ╱
        │            ╲  ╱
        │           YES│
        │    ┌─────────────────────────────┐
        │    │         CALCULATE Q          │───102
        │    └─────────────────────────────┘
        │                   │
        │    ┌─────────────────────────────┐
        │    │      DETERMINE PARAMETERS    │───103
        │    └─────────────────────────────┘
        │                   │
        │    ┌─────────────────────────────┐
        │    │           ADD FUEL           │───104
        │    └─────────────────────────────┘
        │                   │
        │       ┌──────────────────────┐
        │       │        Σ NOx←0        │───105
        │       └──────────────────────┘
        │                   │
        │    ┌─────────────────────────────┐
        │    │       DETECT q OR Δq         │───106
        │    └─────────────────────────────┘
        │                   │
        │    ┌─────────────────────────────┐
        │    │          SET tALL            │───107
        │    └─────────────────────────────┘
        │                   │
        └──────────────────►│
                       │
                ┌─────────────┐
                │     END     │
                └─────────────┘
```

# Fig.15

ALARM DEVICE — 81

LOAD SENSOR — 40

CRANK ANGLE SENSOR — 41

A/D

A/D

OUTPUT PORT — 36

INPUT PORT — 35

ROM — 32

RAM — 33

CPU — 34

# Fig.16

# Fig.17

```
        NOx RELEASE CONTROL

    CALCULATE ΣNOx                    ~200

          ΣNOx>MAX                    ~201
   NO         ?
              │YES
    CALCULATE Q                       ~202

    DETERMINE PARAMETERS              ~203

    ADD FUEL                          ~204

          ΣNOx←0                      ~205

    DETECT q OR Δq                    ~206

    DETECT EFF                        ~207

          EFF>EFF0           NO       ~208
              ?
              │YES      ~209
   tALL←tALL−ΔY                    EFF0−EFF>LMT      ~211
                          NO            ?
                              ~212        │YES
                      tALL←tALL+ΔY

    EFF0←EFF          ~210      ACTUATE ALARM DEVICE   ~213

              END
```

# Fig.18

# Fig.19

# Fig.20

# Fig.21

```
        ┌────────────────────────────────┐
        │      NOx RELEASE CONTROL       │
        └────────────────────────────────┘
                       │
        ┌────────────────────────────────┐ ⌐300
        │        CALCULATE  ΣNOx         │
        └────────────────────────────────┘
                       │
   NO          ╱◇───────────────◇╲        ⌐301
  ◄────────────   ΣNOx＞MAX   
               ╲       ?       ╱
                ◇─────────────◇
                       │ YES
        ┌────────────────────────────────┐ ⌐302
        │          CALCULATE Q           │
        └────────────────────────────────┘
                       │
        ┌────────────────────────────────┐ ⌐303
        │      DETERMINE PARAMETERS      │
        └────────────────────────────────┘
                       │
        ┌────────────────────────────────┐ ⌐304
        │            ADD FUEL            │
        └────────────────────────────────┘
                       │
          ┌──────────────────────────┐    ⌐305
          │         ΣNOx←0           │
          └──────────────────────────┘
                       │
        ┌────────────────────────────────┐ ⌐306
        │         DETECT q OR Δq         │
        └────────────────────────────────┘
                       │
        ┌────────────────────────────────┐ ⌐307
        │          DETECT QHC            │
        └────────────────────────────────┘
                       │
              ╱◇───────────────◇╲        ⌐308
                 QHC＜QHCt          NO
              ╲      ?       ╱ ───────────┐
                ◇─────────────◇           │
                       │ YES  ⌐309        │ ⌐310
        ┌──────────────────────┐  ┌──────────────────────┐
        │    tALL←tALL-ΔZ     │  │    tALL←tALL+ΔZ     │
        └──────────────────────┘  └──────────────────────┘
                       │                  │
                       └────────┬─────────┘
                            ┌─────────┐
                            │   END   │
                            └─────────┘
```

LIST OF REFERENCE NUMERALS

5 ... exhaust manifold

20 ... exhaust post-treatment device

21, 23 ... exhaust pipe

24 ... NOx storing reduction catalyst

25 ... particulate filter

28 ... fuel addition valve

<div align="center">**INTERNATIONAL SEARCH REPORT**</div>

| | International application No. |
|---|---|
| | PCT/JP2007/061030 |

**A. CLASSIFICATION OF SUBJECT MATTER**
*F01N3/08*(2006.01)i, *F01N3/28*(2006.01)i, *F01N3/36*(2006.01)i

According to International Patent Classification (IPC) or to both national classification and IPC

**B. FIELDS SEARCHED**

Minimum documentation searched (classification system followed by classification symbols)
F01N3/08, F01N3/28, F01N3/36

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-22788 A  (Toyota Motor Corp.), 26 January, 2006 (26.01.06), Par. Nos. [0050] to [0063] (Family: none) | 1-6 |
| A | JP 2005-291039 A  (Toyota Motor Corp.), 20 October, 2005 (20.10.05), Par. Nos. [0038] to [0052] (Family: none) | 1-6 |
| A | JP 2003-336518 A  (Toyota Motor Corp.), 28 November, 2003 (28.11.03), Par. Nos. [0058] to [0080] (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 August, 2007 (16.08.07) | 28 August, 2007 (28.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2007/061030 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-344682 A  (Toyota Motor Corp.),<br>15 December, 2005 (15.12.05),<br>Par. Nos. [0043] to [0078]<br>(Family: none) | 1-6 |

Form PCT/ISA/210 (continuation of second sheet) (April 2005)

**EP 2 031 199 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002242663 A